# EUROPEAN PATENT SPECIFICATION

(11) **EP 2 176 122 B1**
(45) Date of publication and mention of the grant of the patent: **19.10.2011**
(21) Application number: 07803540.9
(22) Date of filing: 18.09.2007
(51) Int. Cl.: B63H 25/42

(54) **ANCHORLESS WATERCRAFT POSITIONING SYSTEM**
ANKERLOSES SYSTEM ZUR POSITIONIERUNG VON WASSERFAHRZEUGEN
SYSTÈME DE POSITIONNEMENT POUR STRUCTURE NAVIGANTE SANS ANCRE

(30) Priority: 10.08.2007 DE 102007037828
(43) Date of publication of application: 21.04.2010
(73) Proprietor: Code-X AG, 6045 Meggen (CH)
(72) Inventor: SUTER, Eskil, CH-8488 Turbenthal (CH); SUTER, David, CH-8335 Hittnau (CH)
(74) Representative: OK pat AG
(86) International application number: PCT/EP2007/059837
(87) International publication number: WO 2009/021561

(56) References cited:
- US-A- 5 491 636
- US-A1- 2003 191 562
- US-A1- 2004 227 484

## Description

The invention relates to anchorless watercraft positioning system, designed to maintain a fixed geographical position of a watercraft without employing traditional anchors or weights, suitable to be used on a catamaran-type boat.

The priority of the German patent application with application number DE10 2007 037 828.0, filed on 10 August 2007, with title "Doppelrumpfmotorboot" is herewith claimed.

High-speed boats are typically very difficult to handle and are thus often used by experts only. The whole design and setup of these boats is so that a very stiff system for high-speed racing is provided. The passenger comfort and easy of handling are issues which are typically not taken into consideration, since the respective measures would add to the weight and size of such boats.

There are, however, situations where the high-speed boat is to be operated like many other boats, namely when entering a harbor, or when approaching a pontoon, for instance. But also when using the boat for sunbathing or swimming, the elements that make-up the high-speed elements of the boat are rather disturbing. For instance, the passenger cabin of a high-speed boat is very difficult to access and the entrance hatch or door is typically small.

In other words, a speed-boat typically offers no luxury and no elements that would make trips comfortable. On the other hand comfortable leisure boats lack the high-speed capabilities of a speed-boat limiting their use as an effective means for transportation to a rather confined geographical area.

Another major inconvenience, common to the majority of both speedboats and other watercrafts, is the necessity of using a traditional anchor when a relatively fixed position of the boat is desired. Such a traditional anchorage system has many disadvantages, like its weight, storage requirements which reduce the usable inner volume of the watercraft, the laborious and time-consuming task of lowering/rising of the anchor and in some environmentally fragile areas like coral reefs, the use of these traditional anchors is strictly prohibited.

A few attempts have been made so far to provide an anchorless boat positioning system as the one claimed in US Patent 5491636. The device claimed in this patent application uses a thruster in conjunction with satellite positioning to compensate the relative movement of the boat. The major disadvantage of this system is that the thruster needs to be able to rotate which makes the arrangement complex and the use of so called slip-rings is mandatory in order to allow continuous electrical connections between the thruster and other components of the arrangement like the power source and control electronics.

On the other hand the use of current anchorless positioning systems is quite inefficient due to the fact that when the drift of the vessel is compensated, due to inertia, after a compensation of the initial drift a so called overcompensation effect occurs, i.e.: the vessel tends to manifest a drift in the opposite direction of the initial drift, which needs to be corrected again. These further drifts of opposite directions, even if they have smaller magnitude, make the system very inefficient because the thrusters employed need to be switched on and off frequently and need to be rotated frequently. Also the systems currently available are not suitable to be used in boats with two spatially apart hulls, e.g. catamarans.

The object of the present invention is therefore to provide a highly effective, environmentally friendly anchorless watercraft positioning system that is suitable to be used in a catamaran-type boat.

### SUMMARY OF THE INVENTION

The above-mentioned objects are solved by the present invention by employing two spatially separated electrical engines in a differential, self-compensating arrangement controlled by a control system which acts based on satellite positioning information.

The device according to the present invention allows for interaction-free, automatic position maintenance of a boat, providing a very similar function as compared to a classical anchorage, without the previously enumerated drawbacks presented by these traditional anchorage systems.

The anchorless watercraft positioning system is an active system which constantly monitors the position of the watercraft and immediately responds to any drift from the predefined position by emitting control signals to the electrical engines, which when engaged are capable of providing sufficient thrust in the desired directions to move the watercraft back to the predefined position.

The arrangement including two spatially separated engines is particularly advantageous since such an arrangement eliminates the possibility of the boat to spin undesirably and also reduces or completely eliminates the risk of overcompensation, and thus the continuous swinging of the boat. According to a preferred embodiment of the present invention, cycloidal propellers are used, which are preferred in areas where turbulences created by conventional propellers are to be avoided. These areas include the above-mentioned environmentally fragile areas like coral reefs, but also the artificial, or even natural but shallow channels and also the surroundings of beaches and artificial islands where the dislocation of sand or other sediments could occur due to turbulences. Thus the choice of using the cycloidal propellers contributes to the versatility of the system and its diversified usage area.

In the preferred embodiment of the present invention, the electrical engines are accompanied by separate high power internal combustion engines that are used in a high-speed operation of the boat while the electrical engines are preferably retracted into the body of the boat so that the underwater portions of the boat are unobstructed when the boat is operated in the high-speed mode.

In a further embodiment of the invention, the system is also capable to reduce the roll of the watercraft by measuring the roll tendency and causing the electrical engines to direct thrust in such a way as to compensate the roll tendency of the watercraft. This feature further increases the comfort of passengers while the boat is "anchored" or in a so called slow motion operation mode.

### Brief description of the drawings

For a more complete description of the present invention and for further objects and advantages thereof, reference is made to the following description, taken in conjunction with the accompanying drawings, in which:
- Figure 1: is a perspective view of an embodiment of the invention;
- Figure 2A: is a cross-section of the boat shown in Fig. 1, where the two electric engines are shown in the lowered position;
- Figure 2B: is a perspective bottom view of the boat shown in Fig. 1, with the two electric engines shown in the lowered position;
- Figure 3: is a schematic top view of the boat shown in Fig. 1, where the posi- tions of the two high-power engines and the two electrical engines are shown;
- Figure 4: is a schematic partial cross section of the boat showing one of the electrical engines as mounted in body of the boat;
- Figure 5: is a top view of the boat shown in Fig. 1 with directions of rotation and lateral movement axes indicated;
- Figure 6: is a structural diagram of the main components according to the present invention;
- Figure 7: is a flowchart illustrating the process of the anchorless watercraft positioning.

### Detailed Description

The present invention relates to anchorless watercraft positioning system 100, designed to maintain a fixed geographical position of a boat 10 without employing traditional anchors or weights, suitable to be used on a catamaran-type boat 10.

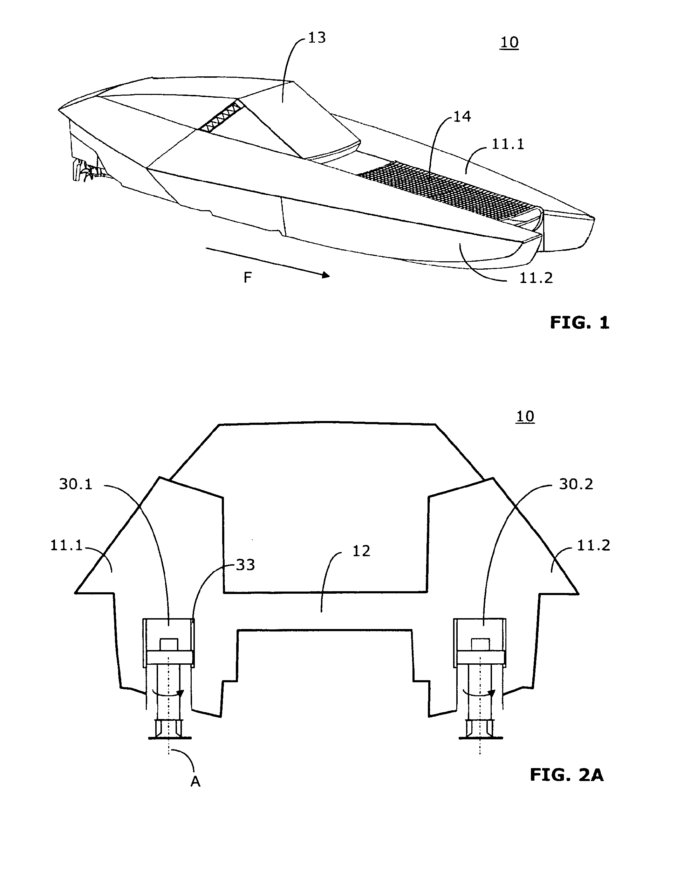

Figure 1 illustrates the boat 10, for which the preferred embodiment of the present invention is designed for. Due to the invention's principle of using two spatially apart spaced electrical engines 30.1, 30.2, it is apparent that the invention is best suitable for employment in a catamaran-type boat with two side hulls 11.1, 11.2 and a rigid connecting structure mechanically connecting the hulls 11.1, 11.2. A passenger cabin 13 is provided in said connecting structure 12 and the boat 10 is powered by two (high power) marine engines 20.1, 20.2 complemented by two electrical engines 30.1, and 30.2, as will be described in the following sections. According to the present invention, the Catameran layout of the present invention has the advantage that a large flat surface is provided where the solar panel 14 can be installed. It is advantageous to position the solar panel 14 between the hulls 11.1, 11.2, since they are protected.

Since the boat 10 is to be operated at high-speeds, the hulls underneath the water level are optimized from a hydrodynamical point of view whereas the part of the boat 10 that is exposed to airstream is optimized from an aerodynamical point of view.

According to the present invention, the boat 10 comprises two (high-power) marine engines 20.1, 20.2 and two solar driven electrical engines 30.1, 30.2, as well as a common control system 40 for controlling these engines. One (high-power) marine engine and one solar driven electrical engine are positioned inside each side hull.

According to the present invention, the electrical engines 30.1, 30.2 are designed so, that they can be retracted into the hull 11.1 or 11.2 of the boat 10, when not in use, in order to improve the hydrodynamic property of the hulls.

Figure 2A shows a cross section of the boat 10 with the electrical engines 30.1, 30.2 in a lowered position, in which they are brought when these engines are in use. When the catamaran-type boat 10 is operated in a high-speed mode, i.e. when the electrical engines 30.1, 30.2 are no longer needed, the electrical engines 30.1, 30.2 are retracted via a guide 33 or rail mounted inside the hull 11.1 or 11.2 along a vertical axis A.

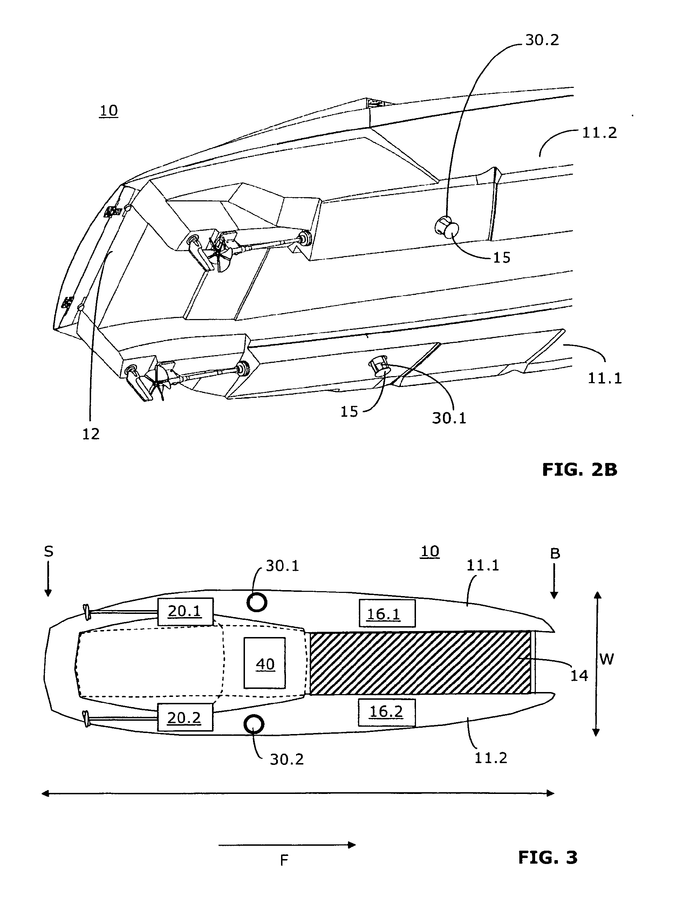

Figure 2B is a perspective bottom view of the boat 10, with the two electric engines 30.1, 30.2 shown in the lowered position. On this figure one can see the bottom plates 15 of the electrical engines 30.1, 30.2 which are meant to close/seal the bottom of the hull 11.1 or 11.2 when the electrical engines 30.1, 30.2 are retracted. These plates 15, as part of the electrical engines 30.1, 30.2, will be described in detail in a later paragraph.

Figure 3 is a schematic top view of the boat 10, where the positions of the two (high-power) engines 20.1, 20.2 and the two electrical engines 30.1, 30.2 are shown. As illustrated in Fig. 3, the two engines 20.1 and 30.1 are located inside the left-hand hull 11.1 and the two engines 20.2 and 30.2 are located inside the right-hand hull 11.2. The high-power marine engines 20.1, 20.2 are positioned closer to the stern S of the boat 10 whereas the electrical engines 30.1, 30.2 are positioned a little towards the center of the boat 10, as illustrated in Fig. 3. As depicted on Fig. 3, in the preferred embodiment, all four engines 20.1, 20.2 and 30.1, 30.2 respectively are all situated towards the stern S of the boat 10, preferably in the rear third portion of the boat 10. This layout is preferred since the boat 10 is designed to glide on top/above the surface of the water when in a high-speed operation mode, and placing the engines towards the rear end facilitates this gliding.

Since the present invention relates only to the anchorless watercraft positioning system 100, further details of the boat 10 and the marine engines 20.1, 20.2 which are not technically relevant to the positioning system 100 will not be discussed in detail.

As mentioned, there are two auxiliary engines 30.1, 30.2 (one per hull). These engines 30.1, 30.2 are electrical motors being mechanically coupled to propellers, preferably cycloidal propellers. A cycloidal propeller is a propeller that has a protective guard with one or more slots therethrough, which run at least approximately perpendicular to the direction of travel F of the boat 10.

Well suited is a VOITH-SCHNEIDER® propeller comprising a rotor which has a number of blades. Examples of such propellers are described in the US-Patents US 6109875 and US 7059923 B2. The entire disclosures of these US patents are hereby incorporated by reference.

It is an advantage of the cycloidal propellers that they are extremely manoeuvrable making them extremely adequate for employment in the anchorless watercraft positioning system 100. Cycloidal propellers have also the characteristic that the turbulences caused are substantially smaller as compared to conventional watercraft propellers. For this reason the use of cycloidal propellers is preferred in areas where turbulences created by conventional propellers are to be avoided. These areas include the above mentioned environmentally fragile areas like coral reefs, but also the artificial, or even natural but shallow channels and also the surroundings of beaches and artificial islands where the dislocation of sand or other sediments could occur due to turbulences. Thus the choice of using the cycloidal propellers contributes to the versatility of the system 100 and its diversified usage area.

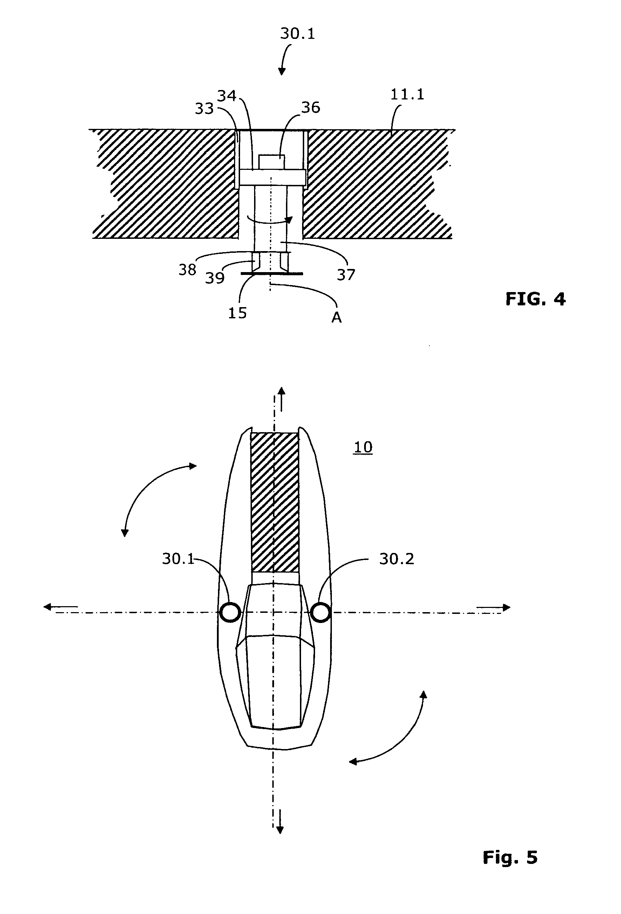

One possible auxiliary engine 30.1 with a cycloidal propeller is illustrated in Fig. 4. The cross-section is perpendicular with respect to the hull 11.1. There is a guide 33 or rail mounted inside the hull 11.1. This guide 33 or rail is attached to the hull 11.1. A mounting element 34 can be moved up and down by means of an actuator (such as a linear motor or the like). This movement may be parallel to a direction which is perpendicular to the surface of the water. An electric motor 36 may be connected to this mounting element 34. The motor 36 drives the propeller so that the blades 39 rotate around an axis A.

In a preferred embodiment, the propeller is a cycloidal propeller with a plate 38 that carries the blades 39. The blades 39 are driven by the motor 36 via the shaft 37. When the auxiliary engine 30.1 is deployed, the motor 36 is powered by a battery 16.1, 16.2 or directly by the solar panel 14 so that the shaft 37 rotates together with the blades 39. The blades 39 are individually mounted so that they can be turned or tilted. Preferably, the blades 39 can be tilted around a perpendicular axis, i.e. around an axis that is essentially parallel with respect to the axis A. Depending on the tilting of the individual blades 39, the auxiliary engine 30.1 provides a thrust that can be used to drive the boat 10 in any direction, as depicted on figure 5. The direction of thrust can be adjusted by tilting the blades 39.

Figure 5 shows the rotation directions and axes of movement directions achievable by the employment of the electric engines 30.1, 30.2 in order to maintain the predefined position of the boat 10.

Back to figure 4, in a preferred embodiment, the lower ends of the blades 39 are mounted in a bottom plate 15. When retracting the auxiliary engine 30.1 by moving it along said guide 33 or rail, the whole engine 30.1 disappears inside the hull 11.1 and the bottom plate 15 closes/seals the bottom of the hull 11.1 or 11.2. Preferably, the bottom plate 15 is designed so that it is smoothly integrated into the bottom of the hull without leaving any gap or steps for the streaming sea water to attack the retracted elements.

When the auxiliary engines 30.1 and 30.2 are deployed, they are moved downwards so as to protrude into the water underneath the boat 10. During an operation where the boat 10 is powered by said two solar driven electrical engines 30.1, 30.2 only, these engines 30.1, 30.2 assume the position as shown in Fig. 2 and Fig. 4.

When the boat is operated only by the (high-power) marine engines 20.1, 20.2, the electrical engines 30.1, 30.2 are fully retracted.

According to the present invention, the energy supply system comprises at least a solar panel 14, a high-capacity battery 16.1, 16.2 or some other kind of energy storage 56. The solar panel 14 can be connected to the batteries and/or engines 30.1, 30.2 so that the engines 30.1, 30.2 can be supplied with the electrical energy needed.

In a preferred embodiment, the high-power engines 20.1, 20.2 are equipped with a generator that can be used to charge the batteries 16.1, 16.2 if no sun light is available or if the batteries need to be re-charged quickly. The batteries 16.1, 16.2 can also be charged by some other power source, for instance while the boat 10 has returned to the harbour.

The Catameran layout of the preferred embodiment of present invention has due to the cab-backward design the advantage that a large flat surface is provided where the solar panel 14 can be installed. It is advantageous to position the solar panel 14 between the hulls 11.1, 11.2, since they are protected.

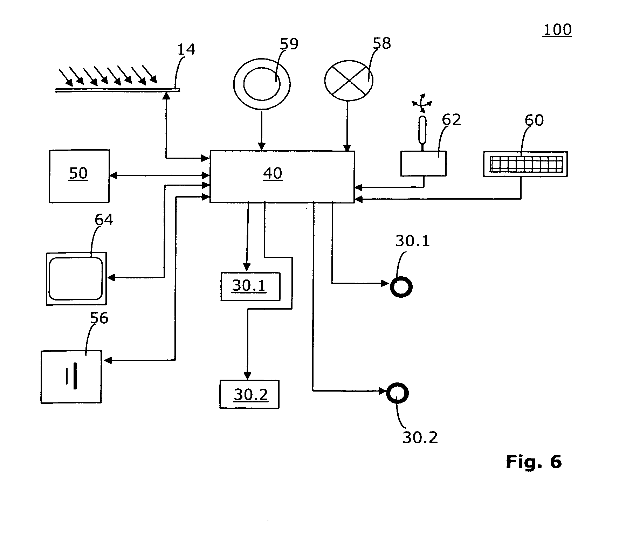

According to the present invention, the various elements of the boat 10 are mechanically and electrically linked so that they co-operate and interact as schematically illustrated in Fig. 6.

As illustrated in Fig. 6, a generator 50, an energy storage 56, and the solar panel 14 are connected to the control system 40. In the preferred embodiment, the system features so called "Photovoltaik" solar cells achieving a very high efficiency. These are solar modules of approximately 7.5 m² with an efficiency of more than 20%.

The generator 50 may be mechanically coupled to a shaft of the high-power marine engines 20.1, 20.2 so that the generator 50 can be used to generate electrical energy for charging the energy storage 56.

In the preferred embodiment, the energy storage 56 is represented by two high-capacity batteries 16.1, 16.2 which are preferably lithium-ion-mangan dry batteries. In further embodiments of the present invention, as energy storage 56, flywheels or high capacity capacitors may also be used.

The main functional components of the anchorless watercraft positioning system 100 are the common control system 40, the two electrical engines 30.1 and 30.2, the satellite positioning receiver 58 and the orientation sensor 59. The common control system 40 is a specially designed controller that has several inputs to receive satellite positioning information, the cardinal orientation of the boat and inputs from the keyboard 60, joystick 62 or other input devices like a remote control for instance. On the other side the control system 40 features outputs, the most important being the one that provides the signals to control the electrical engines 30.1, 30.2 which in turn ensure the maintenance of the predefined position of the boat 10.

In the preferred embodiment, the satellite positioning receiver 58 is a differential global positioning system or DGPS which uses the combination of signals received from satellites orbiting the earth and correction signals received from a group of ground based reference stations to achieve high accuracies. In this way the physical limits related to the accuracy of a standard GPS system may be overcome, and an accuracy of less than +/- 20cm can be achieved. In further embodiments of the present invention alternative satellite positioning systems may be used without affecting the overall inventive concept of the anchorless watercraft positioning system 100.

The orientation sensor 59 has the role to provide the control system 40 with information regarding the orientation of the boat 10. This is necessary in order for the system to be able to steer the boat 10 back to its predefined position PP. This orientation sensor 59 can be implemented in various ways. The most advantageous is to use a digital compass but the use of a gyrosensor or of an additional satellite positioning sensor is also suitable. The later solution requires that the two satellite position sensors to be spaced apart at a distance greater than the expected error of the satellite position information. For this reason, in the implementation of the orientation sensor 59 with two satellite positioning sensors, one of the two sensors is preferably placed at the bow B of the boat 10 and the other one at the stern S, ensuring a distance of more than 10 meters between them which is in all cases greater than the error of the employed DGPS receivers. Thus, by precisely knowing the positions of the stern S and bow end B of the boat 10, the orientation of the boat 10 can be easily computed.

In a further embodiment in which the system 100 comprises a gyrosensor, the control system 40 has such a feature implemented that controls the electrical engines 30.1 and 30.2 respectively so that the so called roll of the boat may be reduced. This feature is implemented in a similar way to the anchoring with the difference that the lateral swing of the boat is recorded and the trust provided by the electrical engines 30.1 and 30.2 is directed in such a way as to compensate the waves causing the boat 10 to roll.

In an even further embodiment of the present invention, the control system combines 40 the information received by the gyrosensor and the satellite positioning sensor 58 in order to control the electrical engines 30.1, 30.2 so that the thrust provided eliminates simultaneously the drift of the boat 10 from its predefined position and at the same time reduces the roll of the boat.

From the layout presented in Figure 6 it is apparent that the operation of the anchorless watercraft positioning system 100 is an emission-free operation mode of the boat 10 since the internal combustion marine engines 20.1, 20.2 are not in operation, with a very low power consumption which enables the operation of the system 100 for an extended period of time from the storage device 56 or for an infinite amount of time, provided sufficient sunlight is available to power the solar panel 14.

It is to be noted that the block diagram of Fig. 6 is a simplified scheme. In a real implementation, the control system 40 controls switches and the like to route the current provided by the solar panel 14 directly to the battery 56, for instance. On the output side, the control system 40 is connected to the electrical engines 30.1, 30.2, as indicated in Fig. 6.

For controlling or programming the control system 40, input means, such as a keyboard 60 or touch screen, and a joy stick 62 may be employed. Furthermore, the control system 40 may be connected to a display screen 64, for instance in order to display information to the user. The display screen 64 may for instance notify the user about the current position of the boat 10.

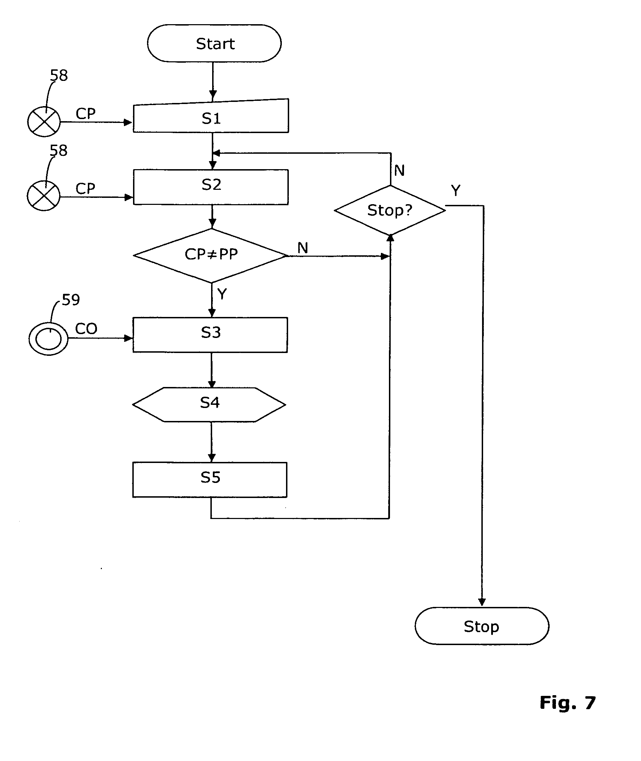

The operation of the entire anchorless watercraft positioning system 100 is performed following the flowchart depicted on Fig. 7 and as described in the following:
- S1: When starting the system, the user instructs the anchorless watercraft positioning system 100 to maintain its current position, at the same moment, the system records the current position CP indicated by the satellite positioning receiver 58 and memorises it as the predefined position PP. An alternative solution for setting the predefined position PP is for the operator to manually enter the PP on the keyboard 60 or other input device.
- S2: The system will read the current position CP indicated by the satellite positioning receiver 58 at a predefined rate. The current position CP read will be compared with the predefined position PP that is to be maintained:
   - if they are equal or, as implemented in the preferred embodiment, the difference is smaller that a predetermined threshold, the system 100 will loop back to S2, unless the system 100 is instructed to stop, i.e. the operator has disengaged the anchorless watercraft positioning system 100.
   - if PP differs from CP by more than the predefined threshold, corrective action must be taken. As a first step of the correction measures, the current orientation CO of the boat 10, indicated by the orientation sensor 59, is read (step S3). The common control system 40 then computes the signals that will cause the electrical engines 30.1, 30.2 to provide a thrust in the correct direction and of sufficient magnitude in order to position the boat 10 back into the predefined position PP (step S4). The next step, S5, is to engage the actuators of the system, i.e. the electrical engines 30.1, 30.2, by applying the signals computed in S4. After taking the corrective actions, the system 100 will loop back to S2, unless it is instructed to stop, i.e. the operator has disengaged the anchorless watercraft positioning system 100.

It will be understood that many variations could be adopted based on the specific structure hereinbefore described without departing from the scope of the invention as defined in the following claims.

## Claims

1. Boat (10) comprising a control system (40) for controlling a first electrical engine (30.1) and for processing satellite positioning information, whereby the control system (40) is able to correct the boat's (10) position by activating said first electrical engine (30.1) if the satellite positioning information indicates that the boat (10) has left its original position, **characterized in that**
- the boat comprises a second electrical engine (30.2), similar to the first electrical engine (30.1),
- said first electrical engine (30.1) and said second electrical engine (30.2) being arranged symmetrically with respect to a center-line of the boat (10),
- said control system (40) driving said first electrical engine (30.1) and said second electrical engine (30.2) so as to compensate positional shifts.

2. The boat (10) of claim 1, **characterized in that** it further comprises means for determining the orientation of the boat (59).

3. The boat (10) of claim 2, **characterized in that** said means for determining the orientation of the boat (59) is a digital compass.

4. The boat (10) of claim 2, **characterized in that** said means for determining the orientation of the boat (59) is a gyro sensor.

5. The boat (10) of claim 4, **characterized in that** by using information provided by the gyro sensor, the control system (40) is able to reduce roll movement of the boat (10) by controlling the first electrical engine (30.1) and the second electrical engine (30.2).

6. The boat (10) of claim 2, **characterized in that** said means for determining the orientation of the boat (59) is an arrangement of at least two satellite positioning information receivers (58) placed specially apart at a distance greater than an expected error of the satellite positioning information.

7. The boat (10) of one of the preceding claims, **characterized in that** it comprises
- a storage system (56) for storing electrical energy,
- a solar panel (14) for converting sun rays into electrical energy, whereby said storage system (56) and said solar panel (14) are linked so that electrical energy provided by said solar panel (14) is stored in the storage system (56) and electrical energy obtained from said storage system (56) is applicable to said first electrical engine (30.1) and said second electrical engine (30.2).

8. The boat (10) of one of the preceding claims, **characterized in that** said control system (40) is able to drive said first electrical engine (30.1) and said second electrical engine (30.2) with electrical energy obtained from said storage system (56).

9. The boat (10) of one of the preceding claims, **characterized in that** said control system (40) offers a virtual anchor mode of operation which is an emission-free mode of operation.

10. The boat (10) of one of the preceding claims, **characterized in that** it is a Catamaran further comprising a left-hand hull (11.1) and a right-hand hull (11.2) wherein the first electrical engine (30.1) and the second electrical engine (30.2) are spatially spaced apart being mounted in the left-hand hull (11.1) and the right-hand hull (11.2) respectively.

11. The boat (10) of one of the preceding claims, **characterized in that** said first electrical engine (30.1) and said second electrical engine (30.2) comprise cycloidal propellers.

12. The boat (10) of one of the preceding claims, **characterized in that**, when not in use, said first electrical engine (30.1) and said second electrical engine (30.2) are fully retractable into a hull of the boat (10).

13. The boat (10) of one of the preceding claims, **characterized in that**, all engines of said boat (10) are located in the rear third of the boat (10).

## Patentansprüche

1. Boot (10) mit einem Steuersystem (40) zur Steuerung eines ersten Elektromotors (30.1) und zur Verarbeitung von Satelliten-Positionsangaben, wobei das Steuersystem (40) in der Lage ist, die Position des Bootes (10) zu korrigieren, indem der erste Elektromotor (30.1) in Betrieb genommen wird, wenn die Satelliten-Positionsangaben darauf hinweisen, dass das Boot (10) von seiner Ausgangsposition abgekommen ist, **dadurch gekennzeichnet, dass**
- das Boot einen zweiten Elektromotor (30.2) aufweist, der dem ersten Elektromotor (30.1) ähnlich ist,
- der erste Elektromotor (30.1) und der zweite Elektromotor (30.2) in Bezug zur Mittellinie des Bootes (10) symmetrisch angeordnet sind,
- das Steuersystem (40) den ersten Elektromotor (30.1) und den zweiten Elektromotor (30.2) derart antreibt, dass Positionsabweichungen ausgeglichen werden.

2. Boot (10) nach Anspruch 1, **dadurch gekennzeichnet, dass** es zudem ein Mittel aufweist, um die Ausrichtung des Bootes (59) zu ermitteln.

3. Boot (10) nach Anspruch 2, **dadurch gekennzeichnet, dass** das Mittel zur Ermittlung der Ausrichtung des Bootes (59) ein digitaler Kompass ist.

4. Boot (10) nach Anspruch 2, **dadurch gekennzeichnet, dass** das Mittel zur Ermittlung der Ausrichtung des Bootes (59) ein Kreiselsensor ist.

5. Boot (10) nach Anspruch 4, **dadurch gekennzeichnet, dass** das Steuersystem (40) durch die Nutzung der Informationen des Kreiselsensors und die entsprechende Steuerung des ersten Elektromotors (30.1) und des zweiten Elektromotors (30.2) die Rollbewegung des Bootes (10) reduzieren kann.

6. Boot (10) nach Anspruch 2, **dadurch gekennzeichnet, dass** das Mittel zur Ermittlung der Ausrichtung des Bootes (59) eine Anordnung von mindestens zwei Empfängern (58) für Satelliten-Positionsangaben ist, die insbesondere in einem größeren Abstand als ein erwarteter Fehler der Satelliten-Positionsangaben angeordnet sind.

7. Boot (10) nach einem der vorausgehenden Ansprüche, **dadurch gekennzeichnet, dass** es umfasst:
- ein Speichersystem (56) zur Speicherung von elektrischer Energie,
- einen Solarkollektor (14) zur Umwandlung der Sonnenstrahlen in elektrische Energie, wobei das Speichersystem (56) und der Sonnenkollektor (14) derart miteinander verbunden sind, dass die vom Sonnenkollektor (14) gelieferte elektrische Energie im Speichersystem (56) gespeichert wird und die elektrische Energie aus dem Speichersystem (56) an den ersten Elektromotor (30.1) und an den zweiten Elektromotor (30.2) anlegbar ist.

8. Boot (10) nach einem der vorausgehenden Ansprüche, **dadurch gekennzeichnet, dass** das Steuersystem (40) mit der elektrischen Energie aus dem Speichersystem (56) den ersten Elektromotor (30.1) und den zweiten Elektromotor (30.2) antreiben kann.

9. Boot (10) nach einem der vorausgehenden Ansprüche, **dadurch gekennzeichnet, dass** das Steuersystem (40) ein virtuelles Ankersystem zur Verfügung stellt, das emissionsfrei arbeitet.

10. Boot (10) nach einem der vorausgehenden Ansprüche, **dadurch gekennzeichnet, dass** es sich um einen Katamaran handelt, der zudem einen linken Bootsrumpf (11.1) und einen rechten Bootsrumpf (11.2) umfasst, wobei der erste Elektromotor (30.1) und der zweite Elektromotor (30.2) jeweils im linken Bootsrumpf (11.1) und im rechten Bootsrumpf (11.2) entfernt voneinander angeordnet sind.

11. Boot (10) nach einem der vorausgehenden Ansprüche, **dadurch gekennzeichnet, dass** der erste Elektromotor (30.1) und der zweite Elektromotor (30.2) Zykloidalpropeller umfassen.

12. Boot (10) nach einem der vorausgehenden Ansprüche, **dadurch gekennzeichnet, dass** der erste Elektromotor (30.1) und der zweite Elektromotor (30.2), wenn sie nicht in Betrieb sind, vollständig in einen Rumpf des Bootes (10) eingezogen werden können.

13. Boot (10) nach einem der vorausgehenden Ansprüche, **dadurch gekennzeichnet, dass** sich alle Motoren des Bootes (10) im hinteren Drittel des Bootes (10) befinden.

## Revendications

1. Bateau (10) comprenant un système de commande (40) pour commander un premier moteur électrique (30.1) et traiter des informations de positionnement par satellite, dans lequel le système de commande (40) est capable de corriger la position du bateau (10) en activant ledit premier moteur électrique (30.1) si les informations de positionnement par satellite indiquent que le bateau (10) a quitté sa position d'origine, **caractérisé en ce que**
- le bateau comprend un deuxième moteur électrique (30.2) similaire au premier moteur électrique (30.1),
- ledit premier moteur électrique (30.1) et ledit deuxième moteur électrique (30.2) sont disposés de façon symétrique par rapport à une ligne médiane du bateau (10),
- ledit système de commande (40) commande ledit premier moteur électrique (30.1) et ledit deuxième moteur électrique (30.2) de façon à compenser les écarts de position.

2. Bateau (10) selon la revendication 1, **caractérisé en ce qu'**il comprend en outre un moyen pour déterminer l'orientation du bateau (59).

3. Bateau (10) selon la revendication 2, **caractérisé en ce que** ledit moyen pour déterminer l'orientation du bateau (59) est une boussole numérique.

4. Bateau (10) selon la revendication 2, **caractérisé en ce que** ledit moyen pour déterminer l'orientation du bateau (59) est un capteur gyroscopique.

5. Bateau (10) selon la revendication 4, **caractérisé en ce que** grâce aux informations fournies par le capteur gyroscopique, le système de commande (40) est capable de réduire le mouvement de roulis du bateau (10) en commandant le premier moteur électrique (30.1) et le deuxième moteur électrique (30.2).

6. Bateau (10) selon la revendication 2, **caractérisé en ce que** ledit moyen pour déterminer l'orientation du bateau (59) est un agencement d'au moins deux récepteurs d'informations de positionnement par satellite (58) positionnés en particulier éloignés, à une distance supérieure à une éventuelle erreur de l'information de positionnement par satellite.

7. Bateau (10) selon l'une des revendications précédentes, **caractérisé en ce qu'**il comprend :
- un système de stockage (56) pour stocker l'énergie électrique,
- un panneau solaire (14) pour convertir les rayons du soleil en énergie électrique, ledit système de stockage (56) et ledit panneau solaire (14) étant reliés de façon à ce que l'énergie électrique fournie par ledit panneau solaire (14) soit stockée dans le système de stockage (56) et à ce que l'énergie électrique obtenue depuis ledit système de stockage (56) puisse servir audit premier moteur électrique (30.1) et audit deuxième moteur électrique (30.2).

8. Bateau (10) selon l'une des revendications précédentes, **caractérisé en ce que** ledit système de commande (40) est capable de commander ledit premier moteur électrique (30.1) et ledit deuxième moteur électrique (30.2) avec l'énergie électrique obtenue depuis ledit système de stockage (56).

9. Bateau (10) selon l'une des revendications précédentes, **caractérisé en ce que** ledit système de commande (40) offre un système d'ancrage virtuel qui est un système sans émission.

10. Bateau (10) selon l'une des revendications précédentes, **caractérisé en ce qu'**il s'agit d'un catamaran qui comprend en outre une coque gauche (11.1) et une coque droite (11.2), dans lequel le premier moteur électrique (30.1) et le deuxième moteur électrique (30.2) sont montés à distance l'un de l'autre, respectivement dans la coque gauche (11.1) et droite (11.2).

11. Bateau (10) selon l'une des revendications précédentes, **caractérisé en ce que** ledit premier moteur électrique (30.1) et ledit deuxième moteur électrique (30.2) comprennent des hélices cycloïdales.

12. Bateau (10) selon l'une des revendications précédentes, **caractérisé en ce que**, lorsqu'ils ne servent pas, ledit premier moteur électrique (30.1) et ledit deuxième moteur électrique (30.2) sont totalement rétractables dans une coque du bateau (10).

13. Bateau (10) selon l'une des revendications précédentes, **caractérisé en que** tous les moteurs dudit bateau (10) sont situés dans le tiers arrière du bateau (10).
